Europäisches Patentamt

European Patent Office

Office européen des brevets

(19)

(11) **EP 0 540 419 B1**

(12) **FASCICULE DE BREVET EUROPEEN**

(45) Date de publication et mention
de la délivrance du brevet:
**14.05.1997 Bulletin 1997/20**

(51) Int Cl.6: **G12B 5/00**, G12B 9/08,
G01N 21/90

(21) Numéro de dépôt: **92402934.1**

(22) Date de dépôt: **29.10.1992**

(54) **Châssis de montage pour dispositifs de contrôle sans contact d'objets moulés, notamment en verre, à haute température**

Montagerahmen für Einrichtungen zur berührungslosen Hochtemperaturkontrolle von Formkörpern, insbesondere aus Glas

Frame for mounting devices for non-contact high-temperature inspection of moulded articles, particularly of glass

(84) Etats contractants désignés:
**AT BE CH DE DK ES FR GB IE IT LI LU NL PT SE**

(30) Priorité: **30.10.1991 FR 9113414**

(43) Date de publication de la demande:
**05.05.1993 Bulletin 1993/18**

(73) Titulaire: **VERRERIE DU LANGUEDOC ET CIE.**
**F-30310 Vergeze (FR)**

(72) Inventeur: **Leser, Jacques**
**F-34400 Lunel (FR)**

(74) Mandataire: **Casalonga, Axel**
**BUREAU D.A. CASALONGA - JOSSE**
**Morassistrasse 8**
**80469 München (DE)**

(56) Documents cités:
EP-A- 0 177 004           US-A- 3 245 533
US-A- 3 956 632           US-A- 4 476 533

• JAPANESE JOURNAL OF APPLIED PHYSICS.
vol. 29, no. 1, Janvier 1990, TOKYO JP pages 196
- 201 M. TANAKA 'Computer-controlled levelling
for a pneumatic antivibration table'

## Description

La présente invention a pour objet un châssis, permettant le montage de divers dispositifs de contrôle sans contact, pour des objets moulés, en particulier des objets en verre à haute température tels que des bouteilles, fabriqués à haute cadence de manière automatique.

La fabrication d'objets moulés et en particulier des bouteilles en verre, nécessite des contrôles de fabrication de grande précision portant en particulier sur l'étanchéité, la verticalité et autres caractéristiques de forme et destinés en outre à éliminer les défauts de fabrication tels qu'inclusions internes dans la matière moulée formant des grains infondus, filaments de verre entre les deux parois de la bouteille (que l'on appelle communément "trapèzes"), excédents de matière sur la bague du goulot etc.

On sait effectuer des contrôles multiples, en partie manuels, sur des objets froids c'est-à-dire environ une heure après la fabrication. Afin de diminuer le temps s'écoulant entre la fabrication et le contrôle et pouvoir ainsi agir sur le processus de fabrication pour diminuer le nombre de défauts, on a déjà mis au point un procédé et un dispositif de contrôle à chaud permettant une contre-réaction sur le système de commande de la machine de fabrication, comme décrit dans le brevet européen 177 004 correspondant au brevet US 4 694 158 (VERRERIE du LANGUEDOC). Un tel procédé de contrôle automatique sans contact de bouteilles à haute température, immédiatement à la sortie de la machine de moulage, présente un grand nombre d'avantages.

Pour la mise en oeuvre d'un contrôle couvrant un grand nombre de défauts il est cependant nécessaire de prévoir une pluralité de dispositifs de contrôle optiques ou opto-électroniques le long du trajet de transport des objets moulés tels que des bouteilles en verre.

Les machines de moulage habituellement utilisées comportent un tapis convoyeur entraîné en continu sur lequel les objets moulés, tels que les bouteilles en verre, sont déposés par l'action d'une pince qui vient prendre la bouteille dans le moule, la bouteille étant ensuite poussée sur le convoyeur au moyen d'une tige de poussée pivotante. Le niveau de la pince de préhension de la bouteille moulée est constant par rapport au sol sur lequel est installée la machine de moulage. Or, la machine est généralement capable de fabriquer des bouteilles de taille variable de sorte qu'il est nécessaire au moment d'un changement de fabrication de modifier le niveau du tapis convoyeur par rapport au sol à l'endroit de la machine de moulage. A la sortie de la machine de moulage, les bouteilles transportées sur le convoyeur sont soumises à différents traitements, avant d'être amenées dans un four appelé "arche de recuisson" à l'intérieur duquel les bouteilles en verre sont soumises à un traitement thermique final de recuit. Compte tenu des dimensions de l'arche de recuisson, le niveau de l'entrée de celle-ci est également constant par rapport au sol. On comprend dans ces conditions, qu'il soit nécessaire de prévoir des possibilités de réglage de l'inclinaison du tapis convoyeur dans un plan vertical entre la machine de moulage et l'arche de recuisson. Ces modifications d'inclinaison du tapis convoyeur entraînent des difficultés supplémentaires pour le montage et la disposition des différents organes de contrôle nécessaires à la mise en oeuvre d'un procédé de contrôle automatique d'objets moulés le long de leur passage sur le tapis convoyeur entre la machine de moulage et l'arche de recuisson. De plus indépendamment d'un tel réglage d'inclinaison dans un plan vertical il convient de rattraper d'éventuels défauts d'inclinaison du tapis convoyeur par rapport à un plan horizontal. Le montage de ces organes de contrôle directement sur le bâti du tapis convoyeur ne peut pas être envisagé en raison des fortes vibrations auxquelles le bâti est soumis.

La présente invention a pour objet de résoudre ces difficultés et de permettre une installation fiable et précise d'un ensemble de dispositifs de contrôle pour la mise en oeuvre d'un procédé de contrôle automatique sans contact d'objets moulés, notamment de bouteilles en verre, à haute température.

Le châssis de montage pour dispositifs de contrôle sans contact selon l'invention permettant le contrôle d'objets moulés, notamment en verre, à haute température et en particulier de bouteilles placées sur un tapis convoyeur entraîné par rapport à un bâti d'inclinaison réglable dans un plan vertical, comprend deux plans de référence parallèles reliés entre eux par des colonnes rigides de façon à définir une structure indéformable enjambant le tapis convoyeur à la manière d'un pont. La structure indéformable n'est pas liée au bâti du convoyeur mais est supportée par l'intermédiaire de trois vérins à déplacements commandés. Au moins un dispositif comportant une source lumineuse émettant un faisceau lumineux dont les caractéristiques dépendent de l'inclinaison du tapis convoyeur, coopère avec un réseau de photodiodes capable d'émettre un signal électrique de commande des vérins supportant la structure indéformable afin de maintenir en permanence les plans de référence du châssis, rigoureusement parallèles au plan du tapis convoyeur quelle que soit l'inclinaison de celui-ci.

Les trois vérins comportent chacun une tige mobile en translation de préférence reliée par l'intermédiaire d'un bloc en matériau élastique à un piètement de support du châssis.

Chaque piètement de support vient s'encastrer par son extrémité supérieure dans un logement approprié du châssis. Dans un mode de réalisation préféré, l'extrémité supérieure des piètements de support et les logements correspondants sont de forme tronconique.

Grâce à l'existence des blocs en matériau élastique, les efforts de cisaillement qui s'exercent sur les trois supports du châssis, se trouvent absorbés quelles que soient les variations d'inclinaison du châssis provoquées par les mouvements des tiges des trois vérins de façon à suivre l'inclinaison du tapis convoyeur.

Dans un mode de réalisation préféré de l'invention, deux sources lumineuses rectilignes sont disposées rigoureusement perpendiculaires aux plans de référence et écartées l'une de l'autre. Les deux sources émettent chacune un pinceau de lumière blanche qui est partiellement occulté par le bâti du tapis convoyeur. Deux barrettes linéaires de photodiodes coopèrent avec les deux sources lumineuses. A cet effet, les barrettes de photodiodes sont placées au foyer d'un dispositif optique de focalisation, disposé de façon à recevoir les deux pinceaux de lumière partiellement occultés. Des moyens sont en outre prévus pour déterminer à chaque instant le nombre de photodiodes éclairées dans chaque barrette et pour émettre des signaux de commande des vérins afin de maintenir le plan de référence rigoureusement parallèle au plan du tapis convoyeur. Grâce à ces deux sources lumineuses il est en outre possible de déterminer à tout instant l'élévation du tapis convoyeur par rapport aux plans de référence du châssis.

Un émetteur lumineux, tel qu'un laser, est de plus fixé de manière solidaire au bâti du convoyeur de façon à émettre un faisceau lumineux fin rigoureusement perpendiculaire au plan du tapis convoyeur. Cet émetteur coopère avec un système optique, de préférence du type anamorphique, solidaire du châssis, et capable de transformer le faisceau lumineux fin en un pinceau lumineux plan sensiblement parallèle au plan vertical dans lequel l'inclinaison du bâti est réglable. Une barrette linéaire de photodiodes est disposée perpendiculairement à la trace de ce pinceau lumineux. Des moyens sont prévus afin de déterminer à chaque instant la ou les diodes de ladite barrette éclairée par ledit pinceau lumineux et pour émettre un signal de commande des vérins afin de maintenir le plan de référence parallèle au plan du tapis convoyeur.

L'invention sera mieux comprise à l'étude de la description détaillée d'un mode de réalisation pris à titre d'exemple nullement limitatif et illustré par les dessins annexés sur lesquels :

la figure 1 est une vue très schématique en élévation des principaux éléments d'une installation de moulage de bouteilles en verre;
la figure 2 est une vue en perspective agrandie schématique des moyens de préhension de la bouteille à la sortie du moule, montrant également son déplacement sur le tapis convoyeur;
la figure 3 est une vue schématique en perspective partiellement éclatée d'un châssis de montage selon l'invention montrant l'ensemble disposé au-dessus d'un tapis convoyeur;
la figure 4 est une vue schématique partielle de l'une des sources lumineuses, coopérant avec une barrette linéaire de photodiodes qui reçoit le pinceau lumineux partiellement occulté;
la figure 5 est une vue schématique de l'émetteur laser et de sa barrette linéaire de photodiodes associée;
la figure 6 illustre la détermination de la transition entre les diodes éclairées et les diodes occultées de la figure 4;
la figure 7 illustre la détermination de la position de la tache lumineuse sur la barrette de photodiodes de la figure 5; et
la figure 8 est un schéma synoptique d'ensemble de la commande des vérins de support du châssis.

L'exemple de réalisation illustré sur les dessins est relatif au contrôle sans contact de bouteilles en verre directement en sortie de moulage à haute température. On comprendra bien entendu que l'invention puisse être également appliquée au contrôle d'autres objets moulés dans la mesure où le même type de problèmes se pose et en particulier à des objets moulés en matière plastique.

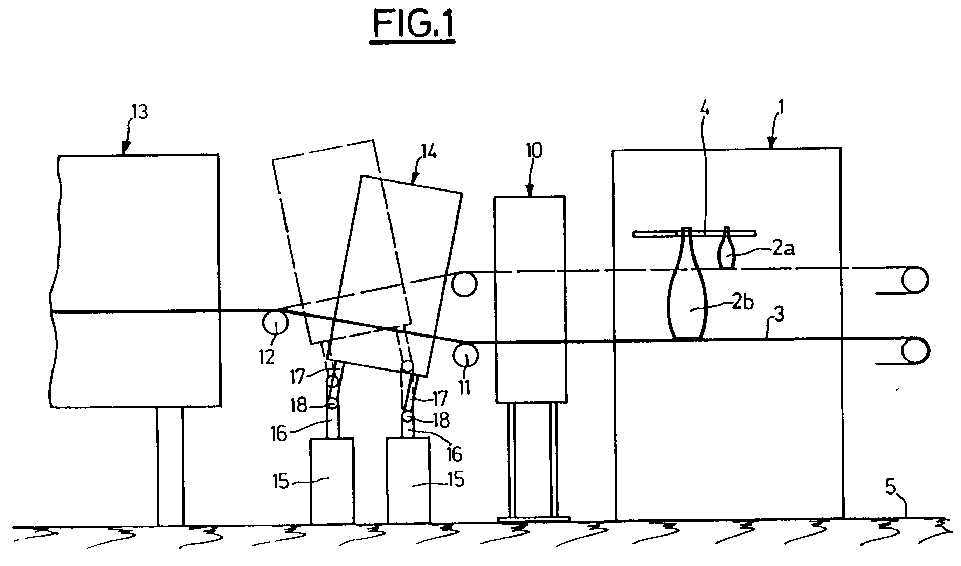

Telle qu'illustrée sur la figure 1, l'installation comprend une machine de moulage 1 comportant plusieurs sections indépendantes pour le moulage de bouteilles en verre. Les bouteilles, dont la taille peut varier par exemple entre une petite bouteille 2a et une grande bouteille 2b, sont déplacées à la sortie de la machine de moulage 1, sur un tapis convoyeur 3 dont seul le brin supérieur a été représenté pour simplifier la figure. L'extraction des bouteilles après moulage se fait au moyen d'une pince 4 ou "take out" dont l'axe est à un niveau constant par rapport au sol 5 sur lequel se trouve installée la machine 1.

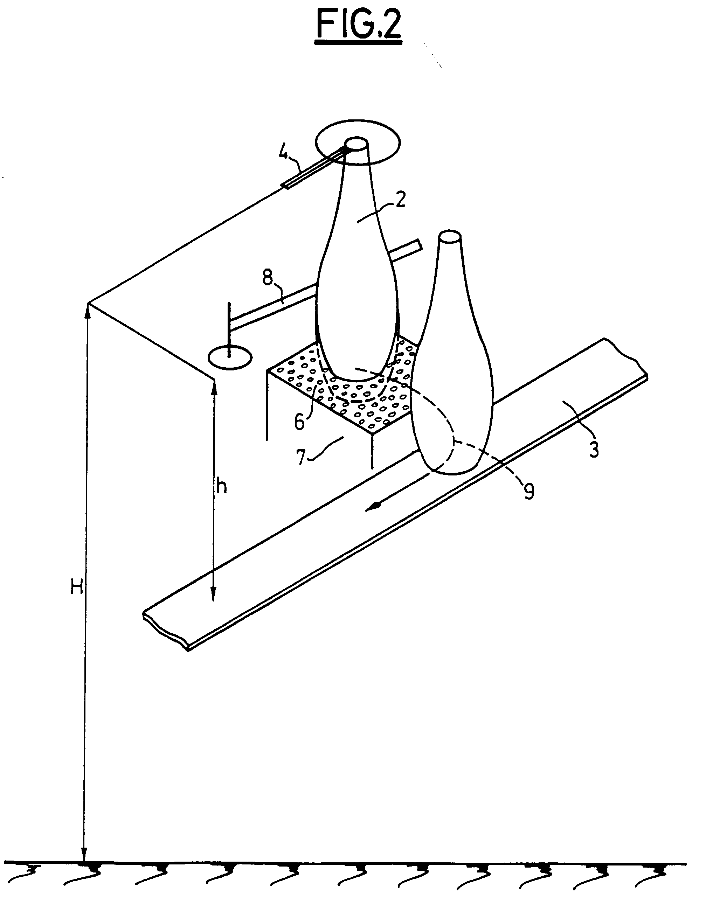

En se référant à la figure 2 qui illustre à plus grande échelle l'extraction d'une bouteille moulée 2, on voit que celle-ci est saisie par la pince 4 qui l'extrait du moule non représenté sur la figure 2, par un mouvement de pivotement dans un plan horizontal. La bouteille 2 maintenue par son goulot à sa partie supérieure, est placée au-dessus d'une plaque perforée 6 se trouvant à la partie supérieure d'un caisson 7 soumis à un courant d'air froid. L'air froid sort par les trous 6 et provoque un refroidissement ou "racissement" de la bouteille 2 qui vient de sortir du moule de la machine de fabrication. Lorsque ce refroidissement est terminé, c'est-à-dire après une période de temps de quelques fractions de seconde, la pince 4 dépose la bouteille 2 sur la plaque 6, la nouvelle position de la bouteille 2 étant illustrée sur la figure 2 en tirets. Puis une tige de poussée rotative 8 pivote et agit sur la bouteille 2 de façon à la déplacer selon la flèche 9 jusque sur le tapis convoyeur 3 en lui communiquant en outre dans ce mouvement une vitesse sensiblement identique à la vitesse de déplacement du convoyeur 3. Sur la figure 2 on a en outre représenté la hauteur H constante de l'axe de la pince 4 par rapport au sol 5 et la hauteur h variable de la surface supérieure du convoyeur 3 par rapport à l'axe de la pince 4 en fonction de la taille des bouteilles 2.

En se reportant à nouveau à la figure 1 on voit qu'en raison de la position fixe en hauteur de l'axe de la pince 4 il est nécessaire de déplacer verticalement le convoyeur 3 pour lui permettre de recevoir les bouteilles de grandes dimensions 2b comme les bouteilles de petites dimensions 2a. Le tapis convoyeur 3 peut donc se déplacer en face de la machine de moulage 1 d'une position basse illustrée en trait plein à une position haute illustrée en traits interrompus. Le tapis convoyeur 3 peut bien entendu adopter d'autres positions intermédiaires en fonction de la taille des bouteilles désirées.

Les bouteilles 2 transportées par le convoyeur 3 traversent, en sortie de machine de fabrication 1, une hotte de traitement à chaud 10 qui permet par exemple le dépôt d'une fine couche de tétrachlorure d'étain par exemple afin d'obturer les microfissures des bouteilles qui viennent d'être fabriquées. Après ce premier traitement, le convoyeur 3 passe sur un galet 11 mobile verticalement selon la position du tapis convoyeur. A la fin de son trajet, le tapis convoyeur 3 passe sur un deuxième galet 12 fixe puis devant un four 13 dit "arche de recuisson" dans lequel une pluralité de bouteilles sont introduites par rangées perpendiculairement au trajet du tapis convoyeur 3 en étant poussées à l'intérieur de l'arche de recuisson 13 par un organe de poussée non représenté sur la figure 1.

Le tapis de l'arche de recuisson 13 se trouvant à un niveau constant, le tapis convoyeur 3 doit rester également à un niveau constant devant l'arche de recuisson 13. Il en résulte que le tapis convoyeur 3 doit présenter une inclinaison réglable entre les galets 11 et 12. Or, c'est précisément à cet endroit qu'il est préférable de procéder aux différents contrôles à chaud sur les bouteilles 2 immédiatement issues de la fabrication.

On voit sur la figure 1 l'illustration schématique du châssis de montage 14 de la présente invention, monté sur le sol 5 par l'intermédiaire de vérins 15 dont deux seulement sont illustrés schématiquement sur la figure 1. Les vérins 15 comportent des tiges 16 qui peuvent se déplacer verticalement et qui sont reliées aux piètements de support 17 du châssis 14 par l'intermédiaire de blocs 18 en matériau élastique, par exemple caoutchouc ou néoprène, capable d'absorber les efforts de cisaillement.

L'invention permet de maintenir la même inclinaison pour le châssis de montage 14 que pour le tapis convoyeur 3 dans la zone de contrôle à chaud des bouteilles, le châssis de montage 14 pouvant occuper une première position illustrée en trait plein pour les bouteilles 2b de grandes dimensions et une deuxième position représentée en traits interrompus pour les bouteilles 2a de petites dimensions. Grâce à la modification d'inclinaison du châssis 14, les différents dispositifs de contrôle qui peuvent être montés sur le châssis 14 restent toujours dans une position constante par rapport au tapis convoyeur 3 c'est-à-dire par rapport aux bouteilles 2 à contrôler.

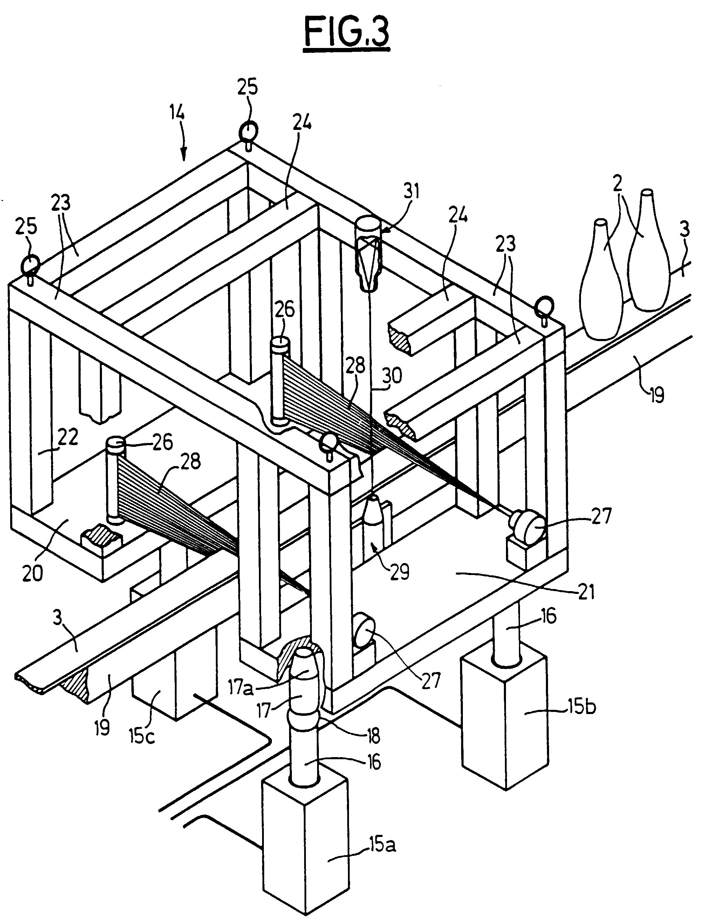

La figure 3 illustre la structure générale du châssis de montage 14. Le châssis de montage 14 est constitué sous la forme d'une structure indéformable venant enjamber le tapis convoyeur 3 et son bâti fixe 19 à la manière d'un pont. La structure indéformable du châssis 14 comprend, dans l'exemple illustré, deux plaques inférieures 20, 21 situées dans un même plan, définissant un plan de référence inférieur pour le châssis de montage 14. Le plan inférieur est situé légèrement au-dessous du plan du tapis convoyeur 3 qui se déplace longitudinalement entre les deux plaques 20, 21. Huit colonnes rigides et indéformables référencées 22 sont montées respectivement aux quatre coins des deux plaques 20, 21 et reliées à un cadre supérieur horizontal constitué par quatre barres 23 également rigides et indéformables. Deux barres supplémentaires 24 situées au-dessus des bords des deux plaques 20, 21 se faisant face, sont également situées dans le plan du cadre supérieur et augmentent la rigidité de l'ensemble de la structure. Les barres 23, 24 définissent un deuxième plan de référence supérieur pour le châssis de montage 14, le plan de référence supérieur étant parfaitement parallèle au plan de référence inférieur.

L'ensemble des colonnes 22, 23, 24 comme les plaques 20, 21 est réalisé en un matériau massif ayant un coefficient de dilatation thermique proche de zéro de façon à réaliser une structure rigide mécaniquement indéformable quelle que soit la température des objets tels que les bouteilles en verre 2 qui traversent le châssis 14 en étant déplacées sur le tapis convoyeur 3.

Sur les deux plans de référence et sur les différentes colonnes 22 ou les barres 23, 24 on comprend qu'il est aisé de disposer les différents moyens de mesure et de contrôle optiques ou optoélectroniques souhaités pour réaliser l'ensemble des contrôles sur les bouteilles 2 à haute température lorsque celles-ci traversent le châssis de montage 14. Ces dispositifs de mesure ne sont pas représentés sur la figure 3.

Le châssis de montage 14 est supporté par rapport au sol par trois vérins 15a, 15b et 15c, les deux vérins 15a, 15b supportant la plaque 21 tandis que le troisième vérin 15c supporte, sensiblement dans sa zone médiane, la plaque 20. Les trois vérins 15a, 15b et 15c sont de préférence des vérins mécaniques-électriques autobloquants en l'absence de courant électrique. Les tiges 16 des trois vérins sont guidées et peuvent se déplacer verticalement sans jeu. A l'extrémité des tiges 16 se trouvent des blocs en matériau élastique 18 par l'intermédiaire desquels les tiges 16 sont reliées aux piètements 17 dont seul l'un d'entre eux a été représenté sur la figure 3, les autres piètements étant identiques. Les extrémités 17a des piètements de support 17 sont de forme tronconique et viennent s'encastrer dans des logements correspondants, également de forme tronconique, pratiqués dans l'épaisseur des plaques 21 et 20. Dans ces conditions, les piètements 17 sont liés rigidement par encastrement aux plaques 20 et 21, le rattrapage de l'inclinaison et des efforts de cisaillement, se faisant uniquement par les joints élastiques 18.

La forme particulière 17a des extrémités des piètements de support 17, qui permet ainsi l'encastrement, autorise l'extraction aisée de l'ensemble du châssis de montage 14, qui peut être déplacé au moyen d'un treuil et d'élingues, non représentées sur la figure, qui viennent coopérer avec les crochets de levage 25. Pour des opérations d'installation ou de nettoyage, il est donc aisé d'extraire l'ensemble du châssis de montage 14, les trois vérins 15a, 15b, 15c restant fixés au sol et portant les trois piètements 17 à l'extrémité de leurs tiges respectives 16. Le châssis de montage 14 peut ensuite être aisément à nouveau installé en position par simple descente au-dessus des trois piètements 17.

L'asservissement de l'inclinaison du châssis de montage 14 à celle du tapis convoyeur 3 est réalisé dans l'exemple illustré au moyen de trois dispositifs distincts. Les deux premiers qui sont identiques sont constitués chacun par une source lumineuse rectiligne 26 montée sur la plaque inférieure 20 perpendiculairement au plan de cette dernière c'est-à-dire perpendiculairement au plan de référence inférieur. Les deux sources lumineuses 26 sont écartées l'une de l'autre en étant disposées au voisinage des deux bords extrêmes de la plaque 20 de façon à diriger un pinceau vertical 28 de lumière blanche vers le tapis convoyeur 3 et son bâti fixe 19. En face des deux sources lumineuses 26 se trouvent placés deux dispositifs opto-électroniques 27 montés sur la plaque 21 de façon à recevoir le pinceau lumineux issu des sources lumineuses 26 après occultation partielle par le bâti 19 et le convoyeur 3 et après focalisation convenable. En effet, compte tenu de la position du plan de référence inférieur, constitué par la surface supérieure des deux plaques 20 et 21, les sources lumineuses 26 sont constituées de façon que les pinceaux lumineux 28 émis, soient partiellement occultés, de préférence sensiblement à moitié, par le tapis convoyeur 3 et son bâti fixe 19.

Le troisième dispositif est constitué par exemple par un émetteur laser 29, solidaire du support 19 du convoyeur 3, et fixé sur le bâti 19 de façon à émettre un faisceau lumineux fin 30 rigoureusement perpendiculaire au plan du tapis convoyeur 3. Un dispositif opto-électronique 31 est fixé sur le cadre supérieur constitué par les barres horizontales 23, dans une position telle qu'il puisse recevoir le rayon laser 30.

Les trois dispositifs opto-électroniques 27 et 31 sont capables d'émettre un signal électrique pour la commande des différents vérins 15a, 15b et 15c afin de maintenir en permanence les plans de référence inférieur et supérieur strictement parallèles au plan du tapis convoyeur 3 et ce quelle que soit son inclinaison.

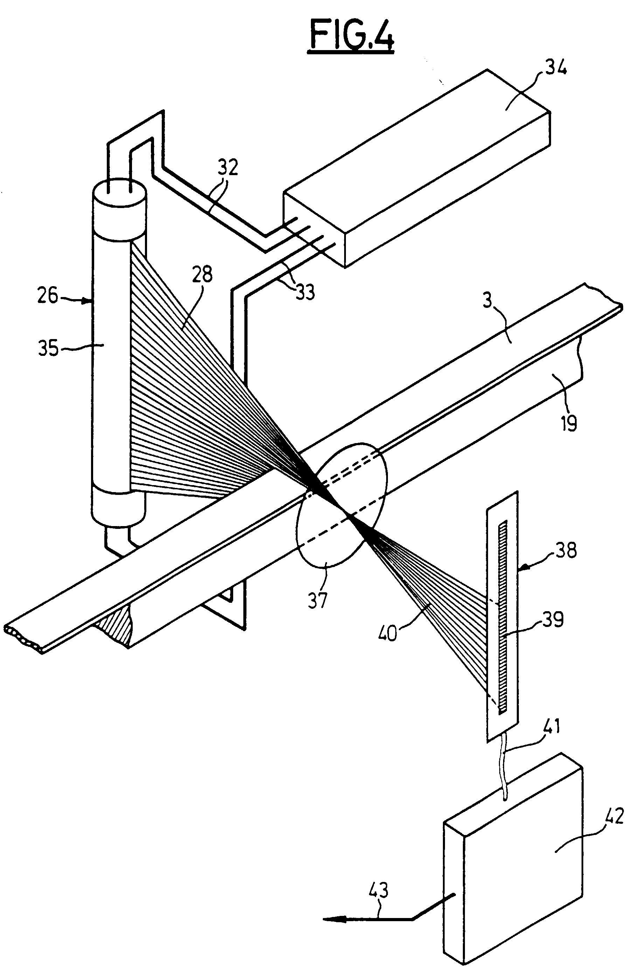

On se référera maintenant à la figure 4, pour expliquer le fonctionnement de l'un des moyens de commande des vérins, comportant l'une des sources lumineuses verticales 26. Dans l'exemple illustré sur la figure 4, la rampe lumineuse 26 est constituée par un tube fluorescent, dont l'axe longitudinal est parfaitement perpendiculaire au plan de référence inférieur constitué par la plaque 20 visible sur la figure 3. Le tube fluorescent 26 est alimenté en courant électrique par les connections 32, 33 reliées à un convertisseur haute fréquence 34. Le convertisseur 34 alimente le tube fluorescent 26 en courant à haute fréquence, par exemple de l'ordre de 25 kHz afin d'utiliser la rémanence de la décharge lumineuse dans le tube 26 pour obtenir une émission de lumière continue c'est-à-dire sans scintillations. Le tube fluorescent 26 comporte avantageusement un cache 35, définissant une fente qui laisse passer un mince pinceau lumineux vertical 28, dirigé perpendiculairement au tapis convoyeur 3 et vers celui-ci de façon à se trouver partiellement occulté par le bâti fixe 19 qui constitue un obstacle opaque pour le pinceau lumineux 28.

De l'autre côté du tapis convoyeur 3 par rapport à la source lumineuse 26, se trouve disposée une optique classique de focalisation 37 qui dirige le pinceau lumineux partiellement occulté sur une barrette linéaire de photodiodes 38 placée au foyer de l'optique 37, et comportant une pluralité de photodiodes 39 par exemple N photodiodes. Le faisceau lumineux 28 partiellement occulté par le bâti 19 devient un pinceau partiel 40 lorsqu'il atteint la barrette de photodiodes 38 illuminant ainsi un certain nombre des photodiodes 39 tandis que d'autres ne sont pas éclairées. Compte tenu de la position du bâti 19, il apparaît qu'une partie des diodes 39 se trouvant à l'extrémité supérieure de la barrette 38 ne reçoit pas de rayons lumineux puisqu'elle correspond à la zone occultée du pinceau lumineux 18 tandis que d'autres diodes 39 situées à la partie inférieure de la barrette 38 reçoivent les rayons lumineux du pinceau 40.

La barrette de photodiodes 38 est reliée par la connexion 41 à un microprocesseur 42 capable d'émettre par la connexion de sortie 43 un signal servant à la commande des vérins 15a, 15b et 15c.

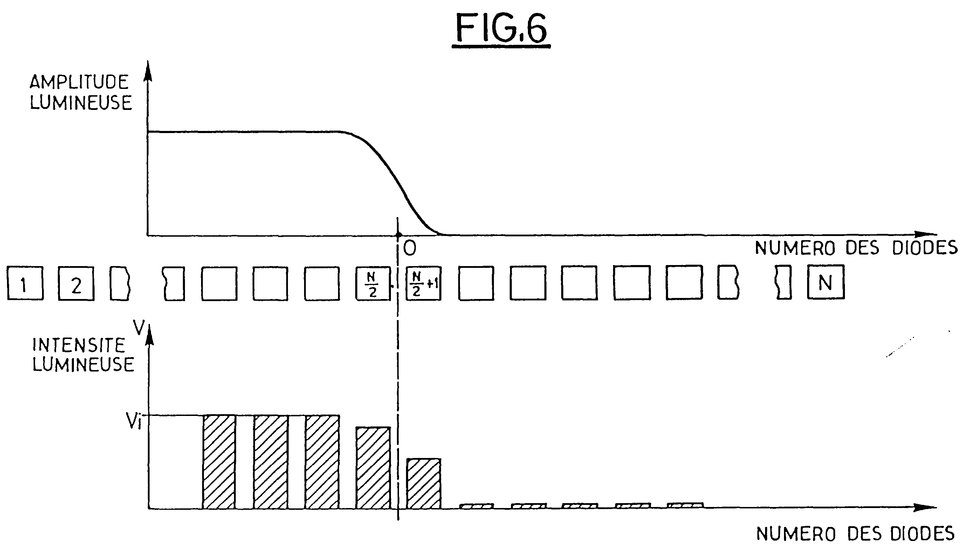

La détection de la position exacte du point de transition sur le réseau de photodiodes 38, est illustrée sur la figure 6, pour un réseau de photodiodes 39 de nombre pair. Les photodiodes 39 sont repérées par un numéro qui va de 1 à N, l'axe O du réseau de photodiodes se trouvant entre la diode N/2 et la diode N/2+1.

L'amplitude lumineuse en fonction du numéro des diodes est représentée sur le graphe supérieur de la figure 6 qui montre qu'une partie des diodes 39, dans l'exemple illustré, les diodes de numéro 1 à N/2 sont totalement illuminées par le pinceau lumineux 40 (figure 4).

Il en résulte une intensité lumineuse v illustrée en fonction des numéros des diodes sur le graphe inférieur de la figure 6 qui est constante pour toutes ces diodes. La diode de numéro N/2+1 qui se trouve sensiblement à l'endroit de la transition ne reçoit qu'une intensité lumineuse sensiblement inférieure à la moitié de l'intensité lumineuse v des diodes précédentes.

Il est donc aisé de placer la transition entre deux photodiodes adjacentes, l'écart entre deux photodiodes étant généralement de l'ordre de 25 μm.

L'asservissement est de préférence conçu de façon que la valeur de consigne pour les signaux de commande des vérins 15a, 15b, 15c place la transition sensiblement au centre O du réseau de photodiodes 38 et ce pour les deux réseaux de photodiodes 38, de façon à maintenir l'inclinaison du châssis de montage identique à celle du tapis convoyeur 3 c'est-à-dire à maintenir les plans de référence strictement parallèles au plan du tapis convoyeur 3. De plus la position des points de transition sur les réseaux de photodiodes 38 permet de mesurer à tout instant l'élévation du tapis transporteur 3 par rapport au plan de référence constitué par les plaques 20, 21.

On notera que des moyens sont prévus pour arrêter le transfert des signaux de mesure lorsqu'un objet se trouvant sur le convoyeur occulte le faisceau lumineux.

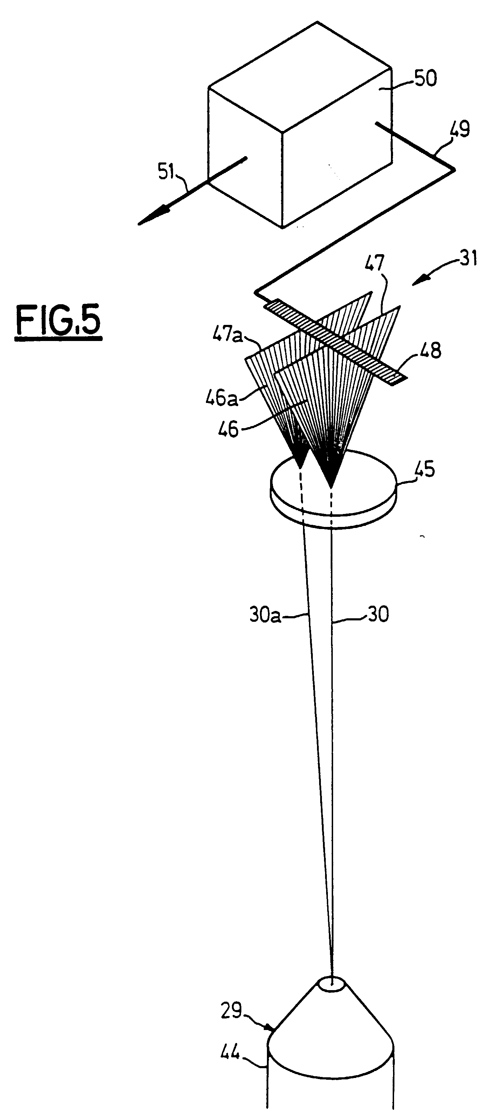

La figure 5 illustre de manière agrandie le dispositif optoélectronique 31 coopérant avec le rayon laser 30. On voit sur la figure 5 le capot de protection 44 de l'émetteur laser 29 qui émet le rayon laser 30. L'émetteur laser 29 est fixé sur un support solidaire du bâti 19 du tapis convoyeur 3 de façon à être rigoureusement perpendiculaire au plan du tapis convoyeur 3. Un système optique anamorphique 45 reçoit le rayon laser 30 et le transforme en un pinceau plan 46 sensiblement vertical dont la trace 47 est perpendiculaire à un réseau linéaire de photodiodes 48 placé dans le plan de référence supérieur du châssis de montage 14 perpendiculairement à l'axe du tapis convoyeur 3. Le réseau de photodiodes 48 est relié par la connexion 49 à un microprocesseur 50 qui émet un signal par la connexion de sortie 51, servant à la commande des vérins 15a, 15b, 15c.

Une variation d'inclinaison relative entre le plan de référence du châssis de montage 14 et le bâti 19 du tapis convoyeur 3 entraîne une variation angulaire du rayon laser 30 qui prend par exemple la position 30a illustrée sur la figure 5. Il en résulte un pinceau lumineux plan 46a dont la trace 47a s'est déplacée par rapport au réseau de photodiodes 48.

La détermination de la position de la tache lumineuse correspondant à la trace 47 sur le réseau de photodiodes 48 permet d'agir sur la commande des vérins 15a, 15b, 15c. On choisit de préférence pour la régulation une valeur de consigne telle que la position de la tache lumineuse correspondant à la trace 47 se trouve confondue avec l'axe du réseau de photodiodes 48.

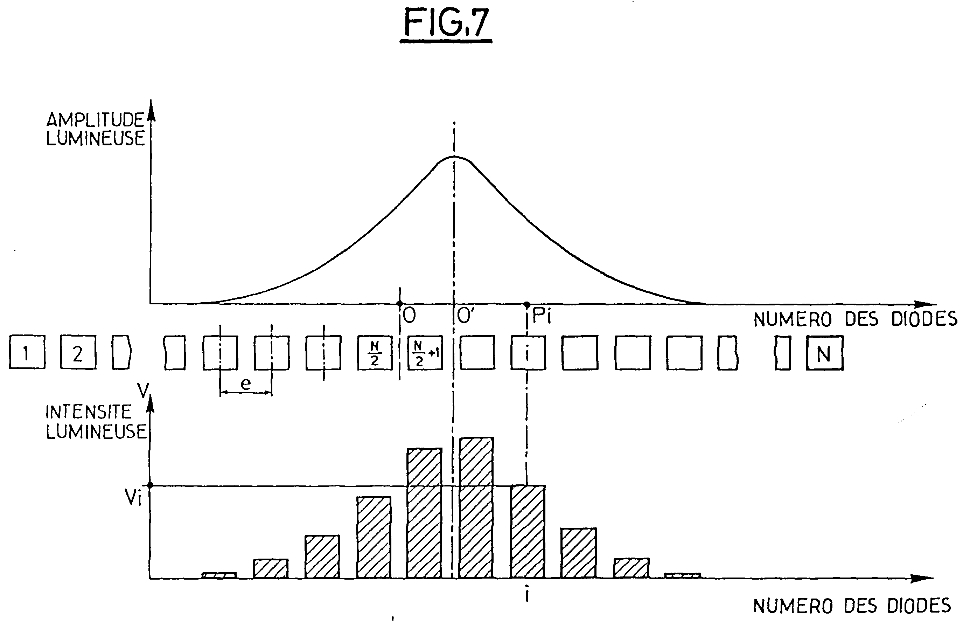

On va maintenant expliquer en se référant aux graphiques de la figure 7, la manière dont il est possible de déterminer la position exacte de la trace 47 sur le réseau de photodiodes 48.

Le graphe situé, dans la partie haute de la figure 7 montre la valeur de l'amplitude lumineuse de la tache lumineuse formée sur la barrette de photodiodes 48 par le pinceau lumineux 46 en fonction du numéro de la diode considérée, chaque diode étant repérée par un numéro allant de 1 à N. L'épaisseur du pinceau lumineux 46 n'étant pas infiniment faible, la tache lumineuse reçue par le réseau de photodiodes 48 n'est pas non plus infiniment petite. Elle présente l'aspect d'une courbe en cloche ayant pour axe de symétrie l'axe passant par le point O' sur la figure 7. Plusieurs diodes se trouvent donc simultanément éclairées par ladite tache lumineuse. Dans l'exemple illustré, le réseau de photodiodes 48 comporte un nombre pair de photodiodes. Le centre du réseau se trouve matérialisé par le point O situé entre la diode $N/2$ et la diode $N/2+1$.

Le graphe inférieur de la figure 7 montre la valeur de l'intensité lumineuse v pour les différentes diodes illuminées par la tache lumineuse en fonction du numéro des diodes. Pour chaque diode le centre de celle-ci est repéré par le point $P_i$ correspondant à la diode d'ordre i celle-ci recevant une intensité lumineuse $v_i$.

Le microprocesseur 50 est capable de déterminer la distance entre le centre de la tache lumineuse O' et le centre du réseau O pour le réseau de diodes de nombre pair.

En admettant que la courbe de répartition lumineuse soit symétrique, ce qui est le cas en pratique, il est possible d'écrire l'équation

$$\sum_{i=1}^{N} \overline{O' P_i} \cdot v_i = O \qquad (I)$$

L'inconnue recherchée $x = \overline{OO'}$ est alors obtenue géométriquement à partir de l'équation (I) et présente la valeur:

$$x = \overline{OO'} = \frac{\displaystyle\sum_{i=1}^{N} \overline{OP_i} \cdot v_i}{\displaystyle\sum_{i=1}^{N} v_i} \qquad (II)$$

Si l'on définit la distance entre le centre de deux photodiodes voisines comme étant la valeur e, on en déduit la distance entre le centre de la photodiode i et le centre O du réseau:

$$\overline{OP}_i = (n_i - \frac{N}{2})\,e + \frac{e}{2} \qquad\qquad\qquad \text{(III)}$$

En reportant cette valeur dans l'équation (II) on obtient finalement la valeur recherchée pour x :

$$x = \frac{\displaystyle\sum_{i=1}^{N} e\left(n_i - \frac{N}{2} + \frac{1}{2}\right) v_i}{\displaystyle\sum_{i=1}^{N} v_i} \qquad \text{(IV)}$$

où

x est la distance entre le centre O du réseau de photodiodes pour un nombre pair de diodes et le centre O' de la tache lumineuse;

e est la distance entre les centres de deux photodiodes voisines;

$n_i$ est le numéro d'une diode d'indice i;

N est le nombre total de photodiodes d'un réseau qui, dans l'exemple est un nombre pair soit en général 128 ou 512; et $v_i$ est l'intensité lumineuse reçue par la photodiode i.

Pour maintenir l'inclinaison du châssis de montage 14 rigoureusement égale à tout instant à l'inclinaison du tapis convoyeur 3, on définit alors une valeur de consigne pour la régulation qui est de préférence telle que l'axe O' de la tacle lumineuse se trouve sensiblement confondu avec l'axe O du réseau de photodiodes 39.

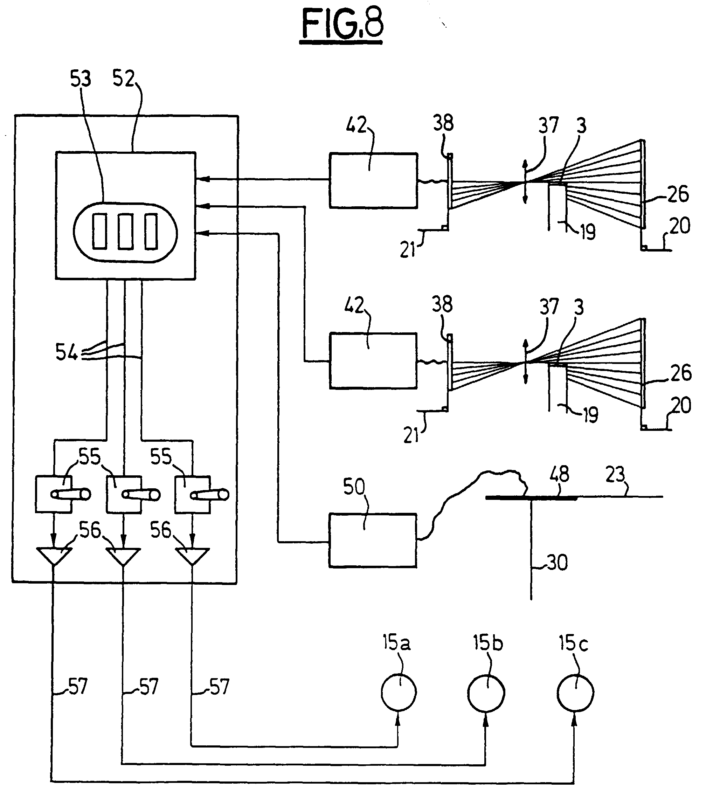

La figure 8 reprend les principaux éléments du dispositif de l'invention. On y retrouve en effet les deux sources lumineuses 26 schématiquement indiquées comme étant montées perpendiculairement au plan de référence inférieur constitué par la plaque 20. Les pinceaux lumineux focalisés par le dispositif optique 37 occultés par le bâti 19 viennent éclairer la portion inférieure des réseaux de photodiodes 38 disposés perpendiculairement au plan de référence inférieur matérialisé par la plaque 21. Les signaux émis, après avoir été traités par les microprocesseurs 42, associés chacun à un réseau de photodiodes 39, sont amenés à un calculateur 52. Dans les mêmes conditions, le rayon laser 30 provoque une tache lumineuse sur le réseau de photodiodes 48 solidaire du plan de référence supérieur matérialisé par exemple par une barre horizontale 23. Le signal émis, après avoir été traité par le microprocesseur 50 est également amené au calculateur 52. Celui-ci comporte un panneau d'affichage 53 permettant de contrôler à tout instant le fonctionnement du dispositif et l'émission des signaux provenant des microprocesseurs 42 et 50. Les signaux de sortie du calculateur 52 sont amenés par les connexions 54 par l'intermédiaire de dispositifs à commande manuelle 55 sur des amplificateurs de puissance 56 chacun relié par la connexion 57 à l'un des vérins 15a, 15b et 15c.

Grâce au châssis de montage de la présente invention, il est possible de maintenir la structure indéformable du châssis en position fixe par rapport au tapis convoyeur 3, quelle que soit l'inclinaison de celui-ci et ce d'une manière simple et parfaitement fiable même dans un environnement hostile comme celui d'une installation de fabrication de bouteilles en verre. Le tapis convoyeur 3 n'est nullement prisonnier du dispositif qui peut au contraire être aisément retiré et reposé sans nécessiter l'arrêt de l'ensemble de l'installation.

Tous les dispositifs de mesure et de contrôle souhaités peuvent aisément être montés à l'intérieur de la structure indéformable du châssis de montage de l'invention de façon à effectuer les contrôles désirés pour les bouteilles en verre se déplaçant sur le tapis convoyeur.

**Revendications**

1. Châssis de montage pour dispositifs de contrôle sans contact d'objets moulés, notamment en verre, à haute température, en particulier de bouteilles, placés sur un tapis convoyeur (3) entraîné par rapport à un bâti (19) d'inclinaison réglable dans un même plan vertical, comprenant des colonnes rigides (22) définissant une structure indéformable enjambant le tapis convoyeur (3) à la manière d'un pont, caractérisé par le fait que ladite structure définit deux plans de référence parallèles, n'est pas reliée au bâti (19) du convoyeur (3) et est supportée par l'intermédiaire de trois vérins (15a, 15b, 15c) à déplacements commandés; et que ledit châssis comprend au moins un dispositif comportant une source lumineuse émettant un faisceau lumineux dont les caractéristiques dépendent de l'inclinaison du tapis convoyeur (3), coopérant avec un réseau de photodiodes capable d'émettre un signal électrique de commande desdits vérins afin de maintenir en permanence les plans de référence précités du châssis, parallèles au plan du tapis convoyeur (3) quelle que soit son inclinaison.

2. Châssis selon la revendication 1, caractérisé par le fait que les trois vérins (15a, 15b et 15c) comportent chacun une tige (16) mobile en translation, reliée par l'intermédiaire d'un bloc (18) en matériau élastique à un piètement (17) de support du châssis.

3. Châssis selon la revendication 2, caractérisé par le fait que chaque piètement de support (17) comporte une extrémité supérieure venant s'encastrer dans un logement du châssis.

4. Châssis selon la revendication 3, caractérisé par le fait que l'extrémité supérieure (17a) des piètements de support (17) et les logements correspondants sont de forme tronconique.

5. Châssis selon l'une quelconque des revendications précédentes, caractérisé par le fait qu'il comprend deux sources lumineuses rectilignes (26) perpendiculaires aux plans de référence, écartées l'une de l'autre, émettant chacune un pinceau de lumière blanche (28) partiellement occulté par le bâti (19) du tapis convoyeur (3), coopérant avec deux barrettes linéaires (38) de photodiodes (39) placées au foyer d'un dispositif optique de focalisation (37) de façon que lesdites barrettes (38) soient éclairées par les deux pinceaux de lumière (28) partiellement occultés et des moyens pour déterminer à chaque instant le nombre de photodiodes (39) éclairées dans chaque barrette (38) et pour émettre des signaux de commande des vérins (15a, 15b, 15c) afin de maintenir le plan de référence parallèle au plan du tapis convoyeur (3).

6. Châssis selon la revendication 5, caractérisé par le fait que les sources lumineuses (26) sont des tubes fluorescents alimentés à une fréquence supérieure à la rémanence desdits tubes fluorescents.

7. Châssis selon l'une des revendications 5 ou 6, caractérisé par le fait que chaque barrette de photodiodes (38) est associée à un microprocesseur (42) recevant les signaux émis par les barrettes de photodiodes (38) et capable de mémoriser des valeurs de consigne de la position des différents faisceaux lumineux, ces valeurs de consigne étant choisies de façon que le signal de transition corresponde chaque fois sensiblement à la zone médiane de chaque barrette de photodiodes.

8. Châssis selon l'une quelconque des revendications 5 à 7, caractérisé par le fait qu'il comprend en outre un émetteur lumineux (29) fixé de manière solidaire au bâti (19) du tapis convoyeur (3) de façon à émettre un faisceau lumineux fin (30) rigoureusement perpendiculaire au plan du tapis convoyeur (3) et coopérant avec un système optique anamorphique (45) solidaire du châssis, capable de transformer le faisceau lumineux fin (30) en un pinceau lumineux plan (46) sensiblement parallèle au plan vertical dans lequel l'inclinaison du bâti (19) du tapis convoyeur (3) est réglable; une barrette linéaire (48) de photodiodes disposée perpendiculairement à la trace (47) dudit pinceau lumineux plan (46); et des moyens pour déterminer à chaque instant la ou les diodes de ladite barrette (48) éclairée par ledit pinceau et pour émettre un signal de commande des vérins (15a, 15b, 15c) afin de maintenir le plan de référence parallèle au plan du tapis convoyeur (3).

9. Châssis selon la revendication 8, caractérisé par le fait que la barrette de photodiodes (48) est associée à un microprocesseur (50) recevant les signaux émis par la barrette de photodiodes (48) et capable de mémoriser une valeur de consigne de la position de la trace (47) du pinceau lumineux (46), cette valeur de consigne étant choisie de façon à que la trace (47) du pinceau lumineux (46) corresponde sensiblement à l'axe de la barrette linéaire de photodiodes (48).

10. Châssis selon l'une des revendications 8 ou 9, caractérisé par le fait que l'émetteur lumineux (29) est un émetteur laser.

**Patentansprüche**

1. Montagerahmen für Einrichtungen der berührungslosen Hochtemperaturkontrolle von Formkörpern, insbesondere aus Glas, im Einzelnen von Flaschen, die auf einem Förderband (3) stehen, das in bezug auf ein Gestell (19) mit einstellbarer Neigung in der gleichen vertikalen Ebene angetrieben wird, enthaltend starre Säulen (22), die eine formstabile Struktur definieren, die das Förderband (3) brückenartig überspannt, dadurch gekennzeichnet, daß die Struktur zwei parallele Bezugsebenen definiert, nicht am Gestell (19) des Förderbandes (3) befestigt ist und mittels dreier Hubzylinder (15a, 15b, 15c) mit betätigbarem Hub gehaltert ist; und daß dieser Rahmen wenigstens eine Vorrichtung aufweist, die eine Lichtquelle beinhaltet, die ein Lichtbündel ausstrahlt, dessen Merkmale von der Neigung des Förderbandes (3) abhängen und das mit einem Netz Photodioden zusammenwirkt, die ein elektrisches Signal zum Antrieb der Hubzylinder aussenden können, um die vorgenannten Bezugsebenen des Rahmens parallel zur Ebene des Förderbandes (3) unabhängig von dessen Neigung permanent beizubehalten.

2. Montagerahmen gemäß Anspruch 1, dadurch gekennzeichnet, daß die drei Hubzylinder (15a, 15b und 15c) jeweils eine verschiebbar-bewegliche Stange (16) aufweisen, die über einen Block (18) aus elastischem Material mit einem Tragegestell (17) des Rahmens verbunden ist.

3. Rahmen gemäß Anspruch 2, dadurch gekennzeichnet, daß jedes Tragegestell (17) ein oberes Ende aufweist, das sich in eine Aufnahme des Rahmens einfügt.

4. Rahmen gemäß Anspruch 3, dadurch gekennzeichnet, daß das obere Ende (17a) des Tragegestells (17) und die entsprechenden Aufnahmen kegelstumpfförmig sind.

5. Rahmen gemäß einem beliebigen der vorstehenden Ansprüche, dadurch gekennzeichnet, daß er zwei linienförmige, lotrecht zu den Bezugsebenen stehende Lichtquellen (26) aufweist, die beabstandet voneinander angeordnet sind und jede ein Strahlenbüschel weißes Licht (28) ausstrahlt, die teilweise vom Gestell (19) des Förderbandes (3) verdeckt werden, und die mit zwei linearen Stegen (38) aus Photodioden (39) zusammenwirken, die im Brennpunkt einer optischen Fokussiereinrichtung (37) angeordnet sind, so daß die Stege (38) von den zwei teilweise verdeckten Strahlenbüscheln (28) beleuchtet werden, und Mittel zum Bestimmen der Anzahl der in jedem Augenblick in jedem Steg (38) beleuchteten Photodioden (39) vorgesehen sind, damit sie Signale zum Antrieb der Hubzylinder (15a, 15b, 15c) aussenden, um die Bezugsebene parallel zur Ebene des Förderbandes (3) beizubehalten.

6. Rahmen gemäß Anspruch 5, dadurch gekennzeichnet, daß die Lichtquellen (26) Leuchtröhren sind, die mit einer Frequenz betrieben werden, die höher ist als das Nachleuchten der Leuchtröhren.

7. Rahmen gemäß Anspruch 5 oder 6, dadurch gekennzeichnet, daß jeder Photodiodensteg (38) einem Mikroprozessor (42) zugeordnet ist, der die von den Photodiodenstegen (38) abgegebenen Signale aufnimmt und in der Lage ist, die Einstellwerte für die Position der verschiedenen Lichtbüschel zu speichern, wobei die Einstellwerte so gewählt werden, daß das Übergangssignal jedesmal im wesentlichen dem Mittelbereich jedes Photodiodenstegs entspricht.

8. Rahmen gemäß einem beliebigen der Ansprüche 5 bis 7, dadurch gekennzeichnet, daß er ferner einen Lichtstrahler (29) enthält, der drehfest mit dem Gestell (19) des Förderbandes (3) verbunden ist, so daß er einen dünnen Lichtstrahl (30) aussendet, der genau lotrecht auf der Ebene des Förderbandes (3) steht und mit einem anamorphen optischen System (45) zusammenwirkt, das fest mit dem Rahmen verbunden ist und das in der Lage ist, den dünnen Lichtstrahl (30) in ein ebenes Strahlenbüschel (46) umzuwandeln, das im wesentlichen parallel zur vertikalen Ebene steht, in der die Neigung des Gestells (19) des Förderbandes (3) einstellbar ist; daß ein linearer Steg (48) mit Photodioden lotrecht zur Spur (47) des ebenen Strahlenbündels (46) steht; und daß Mittel angeordnet sind, um in jedem Augenblick die Photodiode bzw. die Photodioden des Stegs (48) zu erfassen, die vom Strahlenbündel beleuchtet werden, um ein Signal zur Betätigung der Hubzylinder (15a, 15b, 15c) auszusenden, so daß die Bezugsebene parallel zur Ebene des Förderbandes beibehalten wird.

9. Rahmen gemäß Anspruch 8, dadurch gekennzeichnet, daß der Photodiodensteg (48) einem Mikroprozessor (50) zugeordnet ist, der die von dem Photodiodensteg (48) abgegebenen Signale aufnimmt und in der Lage ist, einen Einstellwert der Position der Spur (47) des Lichtbüschels (46) zu speichern, wobei der Einstellwert so gewählt wird, daß die Spur (47) des Lichtbüschels (46) im wesentlichen mit der Achse des linienförmigen Stegs der Photodioden (48) übereinstimmt.

**10.** Rahmen gemäß einem der Ansprüche 8 oder 9, dadurch gekennzeichnet, daß der Lichtstrahler (29) ein Laserstrahler ist.

## Claims

1. Mounting framework for contactless testing devices for moulded objects, in particular glass objects, at high temperature, in particular bottles, placed on a conveyor belt (3) driven with respect to a frame (19) with adjustable inclination in the same vertical plane, comprising rigid columns (22) defining a nondeformable structure straddling the conveyor belt (3) in the manner of a bridge, characterized in that the said structure defines two parallel reference planes, is not connected to the frame (19) of the conveyor (3) and is supported by means of three jacks (15a, 15b, 15c) with controlled displacements; and in that the said framework comprises at least one device including a light source emitting a light beam whose characteristics depend on the inclination of the conveyor belt (3), interacting with a network of photodiodes capable of emitting an electrical signal for controlling the said jacks in order to maintain the aforementioned reference planes of the framework continuously parallel to the plane of the conveyor belt (3) whatever its inclination.

2. Framework according to Claim 1, characterized in that the three jacks (15a, 15b and 15c) each include a rod (16) which can move in translation, connected by a block (18) of elastic material to a support base (17) of the framework.

3. Framework according to Claim 2, characterized in that each support base (17) includes an upper end which fits into a housing in the framework.

4. Framework according to Claim 3, characterized in that the upper end (17a) of the support bases (17), and the corresponding housings, are of frustoconical shape.

5. Framework according to any one of the preceding claims, characterized in that it comprises two rectilinear light sources (26) perpendicular to the reference planes, spaced apart from each other, each emitting a pencil of white light (28) partially occulted by the frame (19) of the conveyor belt (3), interacting with two linear arrays (38) of photodiodes (39) placed at the focus of an optical focussing device (37) so that the said arrays (38) are illuminated by both partially occulted light pencils (28) and means for determining at any instant the number of photodiodes (39) illuminated in each array (38) and in order to emit signals for controlling the jacks (15a, 15b, 15c) in order to maintain the reference plane parallel to the conveyor belt (3).

6. Framework according to Claim 5, characterized in that the light sources (26) are fluorescent tubes powered at a frequency greater than the afterglow of the said fluorescent tubes.

7. Framework according to either of Claims 5 or 6, characterized in that each array of photodiodes (38) is associated with a microprocessor (42) receiving the signals emitted by the arrays of photodiodes (38) and capable of storing set-point values of the position of the various light beams, these set-point values being chosen so that the transition signal corresponds each time substantially to the median zone of each array of photodiodes.

8. Framework according to any one of Claims 5 to 7, characterized in that it furthermore comprises a light emitter (29) solidly fixed to the frame (19) of the conveyor belt (3) so as to emit a thin light beam (30) exactly perpendicular to the plane of the conveyor belt (3) and interacting with an anamorphic optical system (45) solidly fixed to the framework, capable of converting the thin light beam (30) into a planar light pencil (46) substantially parallel to the vertical plane in which the inclination of the frame (19) of the conveyor belt (3) is adjustable; a linear array (48) of photodiodes arranged perpendicular to the trace (47) of the said planar light pencil (46); and means for determining at any instant the diode or diodes of the said array (48) illuminated by the said pencil and in order to emit a signal for controlling the jacks (15a, 15b, 15c) in order to maintain the reference plane parallel to the plane of the conveyor belt (3).

9. Framework according to Claim 8, characterized in that the array of photodiodes (48) is associated with a microprocessor (50) receiving the signals emitted by the array of photodiodes (48) and capable of storing a set-point value of the position of the trace (47) of the light pencil (46), this set-point value being chosen so that the trace (47) of the light pencil (46) substantially corresponds to the axis of the linear array of photodiodes (48).

10. Framework according to either of Claims 8 or 9, characterized in that the light emitter (29) is a laser emitter.

# FIG.1

# FIG.2

# FIG.3

# FIG.4

**FIG.5**

# FIG.6

# FIG.7

EP 0 540 419 B1

# FIG.8